# FASCICULE DE BREVET EUROPEEN

(11) **EP 0 441 943 B1**
(45) Date de publication et mention de la délivrance du brevet: **17.05.1995**
(21) Numéro de dépôt: 90913713.5
(22) Date de dépôt: 07.09.1990
(51) Int. Cl.: F01P 11/16, G05D 23/02

(54) **THERMOSTAT DE SECURITE**
FEHLERSICHERER THERMOSTAT
SAFETY THERMOSTAT

(30) Priorité: 07.09.1989 FR 8911940
(43) Date de publication de la demande: 21.08.1991
(73) Titulaire: Bourgin, Alain, F-42100 Saint-Etienne (FR)
(72) Inventeur: Bourgin, Alain, F-42100 Saint-Etienne (FR)
(74) Mandataire: Picard, Jean-Claude Georges
(86) Numéro de dépôt international: FR9000596
(87) Numéro de publication internationale: WO9103633

(56) Documents cités:
- EP-A- 0 138 618
- US-A- 1 952 516
- US-A- 3 045 918
- US-A- 4 245 782
- US-A- 4 353 501
- US-A- 4 453 668
- PATENT ABSTRACTS OF JAPAN Vol. 10, No. 211 (M-501) (2267) 24 Juin 1986, & JP-A-61 49930 (Matsushita Electric) 12 Mars 1986, voir 1e document en entier

## Description

La présente invention concerne un dispositif de sécurité à soupape et à élément thermostatique immergé, ce dispositif étant plus particulièrement destiné au circuit de refroidissement d'un moteur à combustion interne.

Ce dispositif étant adapté pour commander la circulation du fluide de refroidissement dans une conduite reliant le moteur et un radiateur et comporte à cet effet une soupape associée à un élément thermostatique immergé dans ledit fluide, propre à commander l'augmentation de l'ouverture de la soupape lorsque la température du fluide de refroidissement augmente, et à autoriser la diminution de cette ouverture de la soupape lorsque la température du fluide de refroidissement diminue, ladite soupape étant sollicitée contre son siège de soupape par un premier ressort qui agit à l'encontre de la partie mobile dudit élément thermostatique lorsque celui-ci commande ladite augmentation de l'ouverture de la soupape, dispositif dans lequel ladite soupape est solidarisée dudit élément thermostatique par au moins une soudure prévue pour fondre à une température dite "de sécurité" pour laquelle la circulation du fluide de refroidissement entre le moteur et le radiateur doit être autorisée à pleine ouverture.

Un dispositif de ce type est connu par exemple par le brevet des Etats-Unis KELLY n° 3 558 046, qui comporte un élément thermostatique 24 propre à commander l'ouverture d'une soupape 22 rappelée vers sa position de fermeture par un ressort 35 agissant sur un étrier 37. Une pastille thermofusible 41 relie le sommet de cet étrier à la soupape 22 et à l'extrémité supérieure 26 de l'élément thermostatique. Lorsque la température du fluide de refroidissement augmente, la partie supérieure 26 de l'élément thermostatique se déplace vers le haut en entraînant la soupape 22, ce qui augmente le débit d'écoulement du fluide de refroidissement. Lorsque la température du fluide de refroidissement atteint la valeur critique, la pastille 41 fond et la soupape 22 n'est plus retenue en place par l'étrier 37 ; cette soupape s'échappe dans le circuit de circulation du fluide de refroidissement.

Ce dispositif présente trois inconvénients essentiels.

En effet, plus la température du fluide de refroidissement augmente, plus le ressort 35 est comprimé et plus le sommet de l'étrier 37 soumet la pastille thermofusible 41 à des contraintes mécaniques élevées, ce qui risque de la détruire avant que la température du fluide de refroidissement atteigne la valeur critique.

Le second inconvénient réside dans le fait que la pastille 41 passe de l'état solide à l'état fondu en passant par un état intermédiaire pâteux, ce qui augmente le risque précité de voir la pastille thermofusible 41 être détruite bien avant d'atteindre la température critique.

Le troisième inconvénient réside dans le fait qu'après rupture de la pastille, la soupape, s'échappant dans le circuit de refroidissement, risque de créer une obturation de la conduite de refroidissement en aval, ou d'y créer d'autres problèmes.

Le but de la présente invention est d'éliminer tous ces inconvénients.

A cet effet, un dispositif de sécurité à soupape du type général défini plus haut est, conformément à la présente invention, essentiellement caractérisé en ce qu'il comporte un second ressort agissant sur ladite soupape dans le sens de son ouverture en s'opposant audit premier ressort, en ce que ce premier ressort ne peut agir sur ladite soupape que par l'intermédiaire dudit élément thermostatique, à savoir uniquement lorsque ladite soudure assure la solidarisation entre l'élément thermostatique et la soupape, et en ce que ladite soudure est constituée d'un matériau eutectique, à savoir d'un matériau passant directement de l'état solide à l'état liquide lorsqu'il est soumis à une température déterminée, sans passer par l'état intermédiaire pâteux.

Grâce à cette disposition générale, le second ressort se détend lorsque la température du fluide de refroidissement augmente, puisque cette augmentation de la température tend à ouvrir la soupape. Il en résulte que la soudure thermofusible subit, au niveau de sa jonction avec l'élément thermostatique, des efforts de cisaillement de moins en moins importants au fur et à mesure que la température augmente, ce qui évite qu'elle ne soit détruite avant d'atteindre sa température de fusion. Cet effet est renforcé par le fait que l'on choisit une soudure thermofusible en un matériau eutectique, passant directement de l'état solide à l'état liquide. Le déclenchement de la sécurité, se traduisant par une pleine et définitive ouverture de la soupape, se produira donc pour une température très précise du fluide de refroidissement.

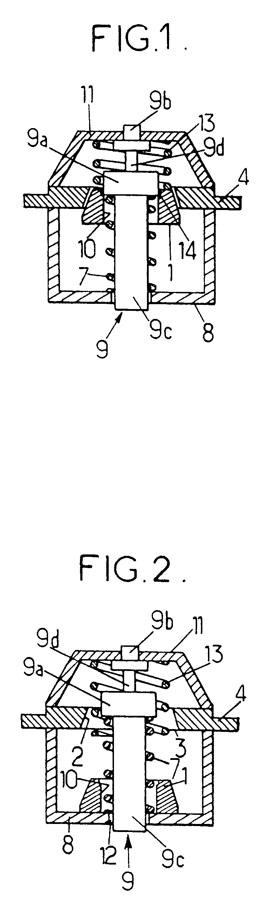

Un mode d'exécution de l'invention va maintenant être décrit à titre d'exemple nullement limitatif, avec référence aux figures 1 et 2 du dessin ci-annexé dans lequel :
- la figure 1 est une vue en coupe axiale d'un dispositif conforme à l'invention, en cours de fonctionnement normal, la soupape étant légèrement ouverte ; et
- la figure 2 est une vue semblable du dispositif après déclenchement de la sécurité.

Le dispositif représenté sur les figures 1 et 2 comporte une soupape 1 propre à s'appliquer contre un siège 2 de soupape pour ouvrir ou obturer un passage 3 ménagé dans une paroi 4 ; lorsque la soupape 1 est fermée, cette paroi 4 sépare de façon étanche les sections 5 et 6 d'une conduite C reliant le moteur d'un véhicule à son radiateur (non représentés). Ce dispositif comporte un premier ressort hélicoïdal 7 comprimé entre un premier organe de maintien 8 et une partie élargie 9a d'un élément thermostatique 9. L'extrémité supérieure de ce ressort traverse une ouverture 10 de la soupape, de sorte qu'il ne peut agir directement sur elle. L'élément 9 est fixé par sa tête 9b sur un second organe de maintien 11, et son corps 9c, solidaire de la partie élargie 9a, peut coulisser dans un passage axial 12 du premier organe de maintien 8.

Un second ressort hélicoïdal 13 est comprimé entre la soupape 1 et le second organe de maintien 11, en passant autour de la partie élargie 9a de l'élément thermostatique 9.

Enfin, la partie élargie 9a est solidarisée de la soupape 1 par une soudure en matériau eutectique 14. Le point de fusion de cette soudure est choisi à une température correspondant à celle pour laquelle la circulation du fluide de refroidissement dans la conduite C doit être autorisée à pleine ouverture, ceci pour éviter une surchauffe du moteur.

Ceci étant, le fonctionnement de ce dispositif est le suivant :
lorsque le fluide de refroidissement est froid, le ressort 7 sollicite la soupape 1 vers le siège 2, ce qui obture le passage 3. L'eau du moteur n'allant pas au radiateur, la température du fluide de refroidissement augmente. L'élément thermostatique 9 s'allonge, la partie 9a-9c coulissant vers le bas sur la tige 9d qui relie la tête 9b à la partie élargie 9a, ceci de façon en soi connue. La tête 9a entraîne donc la soupape 1 vers le bas en comprimant le ressort 7, ce qui autorise l'écoulement du liquide de refroidissement par le passage 3, comme cela est représenté à la figure 1. Si la température du liquide de refroidissement diminue, le ressort 7 ramène la soupape 1 en position de fermeture.

Il est à noter que plus la température est élevée et plus la soupape 1 a une position basse, par suite de quoi la soudure eutectique 14 est soumise à une contrainte de cisaillement de plus en plus faible, puisque le ressort 13 se détend progressivement et n'exerce bientôt plus aucune pression sur la soupape 1. De la sorte, la soudure eutectique 14 ne risque pas de céder avant d'arriver à sa température de fusion, comme cela est le cas avec les soudures non eutectiques de l'art antérieur.

Si la température du fluide de refroidissement dépasse une valeur prédéterminée, cette soudure 14 fond, ce qui désolidarise la soupape 1 de la partie élargie 9a de l'élément thermostatique. Alors, la soupape 1 tombe définitivement sur l'organe de maintien 8 (figure 2), ce qui maintient la pleine ouverture du passage 3 et assure ainsi la sécurité contre la surchauffe, en augmentant la circulation du fluide de refroidissement entre le moteur et le radiateur.

Du fait que la soudure 14 est eutectique, elle fond brutalement dès que la température du fluide de refroidissement atteint le niveau critique, sans passer par un état pâteux intermédiaire, comme cela est le cas avec les matériaux fusibles habituellement utilisés, qui ne sont pas des eutectiques.

Ainsi, le fait que la soudure 14 soit eutectique, combiné au fait que les efforts de cisaillement qui sont exercés sur cette soudure par le ressort 13 diminuent lorsque la température augmente, lui assure une grande longévité tant que la température du fluide de refroidissement n'atteint pas sa température de fusion.

## Revendications

1. Dispositif de sécurité à soupape et à élément thermostatique immergé pour circuit de refroidissement d'un moteur à combustion interne, ce dispositif étant adapté pour commander la circulation du fluide de refroidissement dans une conduite (C) reliant le moteur et un radiateur, et comportant à cet effet une soupape (1) associée à un élément thermostatique (9) immergé dans ledit fluide, propre à commander l'augmentation de l'ouverture de la soupape (1) lorsque la température du fluide de refroidissement augmente, et à autoriser la diminution de cette ouverture de la soupape (1) lorsque la température du fluide de refroidissement diminue, ladite soupape (1) étant sollicitée contre son siège (2) de soupape par un premier ressort (7) qui agit à l'encontre de la partie mobile dudit élément thermostatique (9) lorsque celui-ci commande ladite augmentation de l'ouverture de la soupape, dispositif dans lequel ladite soupape (1) est solidarisée dudit élément thermostatique (9) par au moins une soudure (14) prévue pour fondre à une température dite "de sécurité" pour laquelle la circulation du fluide de refroidissement entre le moteur et le radiateur doit être autorisée à pleine ouverture, caractérisé en ce qu'il comporte un second ressort (13) agissant sur ladite soupape (1) dans le sens de son ouverture en s'opposant audit premier ressort (7), en ce que ce premier ressort (7) ne peut agir sur ladite soupape que par l'intermédiaire dudit élément thermostatique (9), à savoir uniquement lorsque ladite soudure (14) assure la solidarisation entre l'élément thermostatique (9) et la soupape (1), et en ce que ladite soudure (14) est constituée d'un matériau eutectique, à savoir d'un matériau passant directement de l'état solide à l'état liquide lorsqu'il est soumis à une température déterminée, sans passer par l'état intermédiaire pâteux.

2. Dispositif selon la revendication 1, caractérisé en ce que ledit élément thermostatique (9) est solidarisé de ladite soupape (1), par ladite soudure en un matériau eutectique (14), au niveau d'une partie élargie (9a) dudit élément (9), et en ce que ledit premier ressort (7) est comprimé entre un premier organe de maintien (8) et ladite partie élargie (9a) de l'élément thermostatique (9), en traversant une ouverture (10) de ladite soupape (1).

3. Dispositif selon les revendications 1 et 2, caractérisé en ce que ledit second ressort (13) est comprimé entre ladite soupape (1) et un second organe de maintien (11), en passant autour de ladite partie élargie (9a) de l'élément thermostatique.

## Claims

1. Safety device with a valve and an immersed thermostatic element for an internal combustion engine cooling system, this device being adapted for controlling the circulation of the cooling fluid in a pipe (C) connecting the engine and a radiator, and including for this purpose a valve (1) associated with a thermostatic element (9) immersed in the said fluid, suitable for demanding an increase in the opening of the valve (1) when the temperature of the cooling fluid increases, and enabling a decrease in this opening of the valve (1) when the temperature of the cooling fluid decreases, the said valve (1) being pushed against its valve seat (2) by a first spring (7) which acts against the moving part of the said thermostatic element (9) when the latter demands the said increase in opening of the valve, a device in which the said valve (1) is fixed to the said thermostatic element (9) by at least one weld (14) designed to melt at a so-called "safety" temperature at which the circulation of the cooling fluid between the engine and the radiator must be allowed at full opening, characterised in that it includes a second spring (13) acting on the said valve (1) in the direction of its opening whilst opposing the said first spring (7), in that this first spring (7) is able to act on the said valve only through the said thermostatic element (9), namely solely when the said weld (14) provides connection between the thermostatic element (9) and the valve (1), and in that the said weld (14) consists of a eutectic material, namely a material passing directly from the solid state to the liquid state when it is subjected to a given temperature, without passing through the intermediate viscous state.

2. Device according to Claim 1, characterised in that the said thermostatic element (9) is fixed to the said valve (1), by the said weld consisting of a eutectic material (14), at a broadened part (9a) of the said element (9), and in that the said first spring (7) is compressed between a first holding member (8) and the said broadened part (9a) of the thermostatic element (9), passing through an opening (10) in the said valve (1).

3. Device according to Claims 1 and 2, characterised in that the said second spring (13) is compressed between the said valve (1) and a second holding meter (11), passing around the said broadened part (9a) of the thermostatic element.

## Patentansprüche

1. Sicherheitsvorrichtung mit Ventil und mit eingetauchtem thermostatischem Element für einen Kühlkreis einer Brennkraftmaschine, wobei diese Vorrichtung dazu ausgebildet ist, die Zirkulation des Kühlfluids in einer die Brennkraftmaschine und einen Kühler verbindenen Leitung (C) zu steuern, und umfaßt zu diesem Zweck ein Ventil (1), welches einem in das Fluid eingetauchten thermostatischen Element (9) zugeordnet ist, das dazu geeignet ist, die Zunahme der Öffnung des Ventils (1) zu steuern, wenn die Temperatur des Kühlfluids zunimmt, und die Verringerung dieser Öffnung des Ventils (1) zuzulassen, wenn die Temperatur des Kühlfluids abnimmt, wobei das Ventil (1) gegen seinen Ventilsitz (2) durch eine erste Feder (7) gedrängt ist, welche gegen den beweglichen Abschnitt des thermostatischen Elements (9) wirkt, wenn dieses die Zunahme der Öffnung des Ventils steuert, wobei das Ventil (1) mit dem thermostatischen Element (9) durch wenigstens ein Lot (14) verbunden ist, welches dazu vorgesehen ist, bei einer sogenannten "Sicherheits"-Temperatur zu schmelzen, bei welcher die Zirkulation des Kühlfluids zwichen dem Motor und dem Kühler mit vollständiger Öffnung zuzulassen ist, dadurch gekennzeichnet, daß sie eine zweite Feder (13) umfaßt, welche auf das Ventil (1) in der Richtung seiner Öffnung einwirkt und gegen die erste Feder (7) gerichtet ist, daß die erste Feder (7) nur über das thermostatische Element (9) auf das Ventil einwirken kann, nämlich einzig dann, wenn das Lot (14) die Verbindung zwischen dem thermostatischen Element (9) und dem Ventil (1) gewährleistet, daß das Lot (14) aus einem eutektischen Material gebildet ist, nämlich einem direkt von dem festen Zustand in den flüssigen Zustand übergehenden Material, wenn es einer bestimmten Temperatur ausgesetzt ist, ohne den pastenartigen Zwischenzustand zu durchlaufen.

2. Vorrichtung nach Anspruch 1, dadurch gekennzeichnet, daß das thermostatische Element (9) mit dem Ventil (1) durch das Lot (14) aus einem eutektischen Material in Höhe eines erweiterten Bereichs (9a) des Elements (9) verbunden ist und daß die erste Feder (7) zwischen einem ersten Halteelement (8) und dem erweiterten Bereich (9a) des thermostatischen Elements (9) eingezwängt ist, wobei die erste Feder eine Öffnung (10) des Ventils (1) durchsetzt.

3. Vorrichtung nach den Ansprüchen 1 und 2, dadurch gekennzeichnet, daß die zweite Feder (13) zwischen dem Ventil (1) und einem zweiten Halteorgan (11) und um den erweiterten Bereich (9a) des thermostatischen Elements vorbeigehend eingezwängt ist.
